## Europäisches Patentamt
## European Patent Office
## Office européen des brevets

(11) Veröffentlichungsnummer: **0 429 392 A1**

# (12) EUROPÄISCHE PATENTANMELDUNG

(21) Anmeldenummer: **90810748.5**

(51) Int. Cl.⁵: **F16H 15/18**

(22) Anmeldetag: **01.10.90**

(30) Priorität: **26.10.89 CH 3880/89**

(43) Veröffentlichungstag der Anmeldung:
**29.05.91 Patentblatt 91/22**

(84) Benannte Vertragsstaaten:
**AT DE FR GB NL SE**

(71) Anmelder: **GEBRÜDER SULZER AKTIENGESELLSCHAFT**
**Zürcherstrasse 9**
**CH-8401 Winterthur(CH)**

(72) Erfinder: **Timcke, Jürgen Helmut Anton**
**Friedaustrasse 7**
**CH-8355 Aadorf(CH)**

(54) **Stopfbuchsbrille.**

(57) Die Stopfbuchsbrille (1) zu einer Wellenabdichtung weist dank einem Flansch mit einem konkaven, in Richtung Packungsringen (14) orientierten Profil eine geringe Bauhöhe auf. Dabei ist der Flansch über die Fassung (13) der Wellenabdichtung stülpbar.

Fig.1

## STOPFBUCHSBRILLE

Die Erfindung betrifft eine Stopfbuchsbrille gemäss dem Oberbegriff des Anspruchs 1 und eine Wellenabdichtung mit der erfindungsgemässen Stopfbuchsbrille.

Mit Stopfbuchsen werden bewegte Stangen oder Wellen abgedichtet. Dabei dient die Stopfbuchsbrille zum Anpressen der Packungsringe, die als plastisch verformbare Körper einen Ringraum zwischen Stange bzw. Welle und Gehäuse dicht ausfüllen.

Stopfbuchsbrillen gibt es in vielen Formen: mit runden, rechteckigen oder elliptischen Flanschen sowie mit Löchern oder Schlitzen für die Schrauben; es gibt ein- oder zweiteilige Stopfbuchsbrillen. Sie werden gegossen oder sie werden aus Halbzeug wie beispielsweise Flacheisen hergestellt. Die bisherigen, nach dem Stand der Technik hergestellten Stopfbuchsbrillen haben plattenartige Flansche. Mit dieser Flanschform benötigen die Stopfbuchsbrillen viel Platz, was sich besonders beim Auswechseln der verbrauchten Packungsringen hinderlich auswirkt.

Es ist Aufgabe der vorliegenden Erfindung, eine Stopfbuchsbrille zu schaffen, deren Flansch eine biegefeste und wenig Material benötigende Fort aufweist und die eine geringe Baulänge in axialer Richtung hat.

Diese Aufgabe wird erfindungsgemäss durch die Merkmale des Kennzeichens des Anspruchs 1 gelöst. Die Wellenabdichtung, wie sie im unabhängigen Anspruch 10 gekennzeichnet ist, macht eine geringe Baulänge der erfindungsgemässen Stopfbuchsbrille möglich.

Der erfindungsgemässe, aus dünnwandigem Material bestehende Flansch muss, um die Schraubenkräfte aufnehmen zu können, mit Versteifungswänden verstärkt werden. Dies geschieht einerseits durch einen hochgezogenen Aussenrand des Flansches; andererseits dient auch das zum Anpressring überleitende Rohrstück zur Verstärkung.

Für die Übertragung der Anpresskräfte, die auf die Pakungsringe ausgeübt werden müssen, ist es vorteilhaft, den Anpressring im Innenbereich konisch auszubilden und dies so, dass die Konusspitze in Richtung Grundplatte weist. Gegen aussen ist der Anpressring abgerundet und geht dort in das zum Flansch überleitende Rohrstück über.

Eine bevorzugte Ausführungsform der erfindungsgemässen Stopfbuchsbrille besteht in einer zweiteiligen Konstruktion aus Flanschteil und Packungsring-Anpressteil. Die beiden Teile sind so geformt, dass sie formschlüssig aufeinander passen. Vorteilhaft ist, wenn der Flanschteil in den zweiten Teil konzentrisch eingreift. Dadurch ergibt sich auf einfache Weise eine Zentrierung des Anpressringes. Die beiden Teile können beispielsweise durch Punktschweissen oder Kleben dauerhaft miteinander verbunden werden.

Die erfindungsgemässe Konstruktion erlaubt die Herstellung der Stopfbuchsbrille durch Tiefziehen aus Metallblechen, beispielsweise Stahlblechen verschiedener Qualitäten und insbesondere aus rostfreiem Stahl. Es ist auch möglich, die erfindungsgemässe Stopfbuchsbrille aus mehrern zurechtgeschnittenen und gebogenen Metallblech stücken zusammenzusetzen und durch Schweissen miteinander zu verbinden. Eine weitere Möglichkeit besteht darin, die Stopfbuchsbrille mit der erfindungsgemässen Form als Gussteil auszuführen.

Beim Abdichten einer Stange oder Welle, insbesondere bei der Wellenabdichtung einer Zentrifugalpumpe, ist es vorteilhaft, wenn die Stopfbuchsbrille eine geringe Baulänge aufweist. Dies ist mit der erfindungsgemässen Stopfbuchsbrille möglich, falls das Gehäuseteil, das als Fassung der Wellendichtung dient, geeignet ausgebildet ist. Diese Fassung muss eine Form aufweisen, die erlaubt, die Stopfbuchsbrille mit der konkaven Vertiefung des Flansches über den Rand der Fassung zu stülpen.

Im folgenden wird die Erfindung anhand von in den Zeichnungen dargestellten Beispielen näher erläutert. Es zeigen:

Fig.1 einen Schnitt durch die Dichtung einer Welle, wobei links eine bisherige, nach dem Stand der Technik gefertigte Stopfbuchsbrille dargestellt ist und rechts eine erfindungsgemässe Stopfbuchsbrille,

Fig.2 eine perspektivische Darstellung einer Stopfbuchsbrille, bei der Wandpartien ausgebrochen sind und

Fig.3 einen Querschnitt durch eine zweiteilige Stopfbuchsbrille.

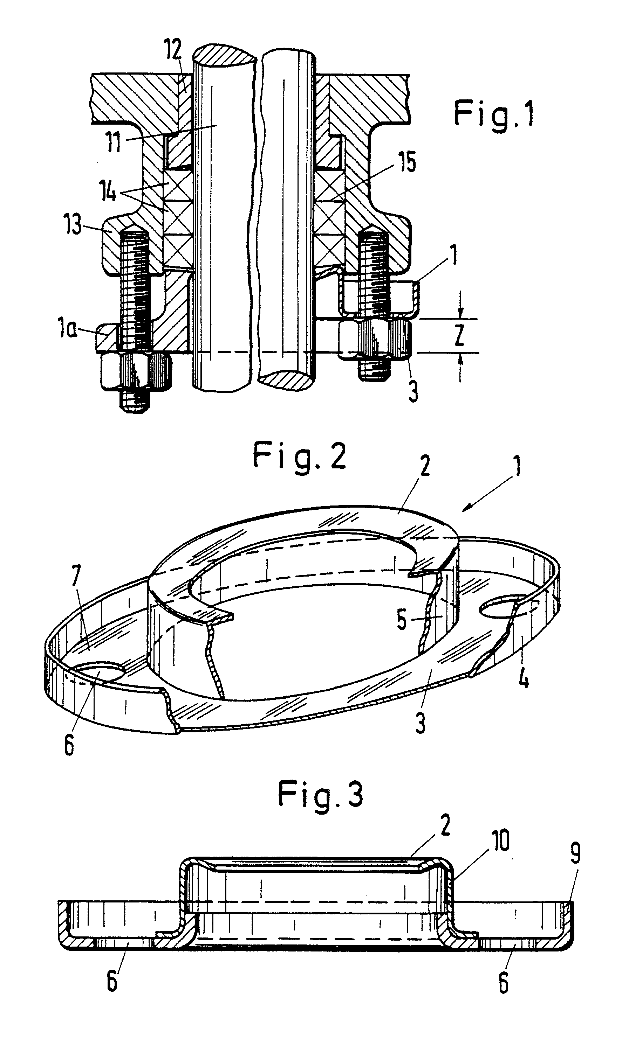

Fig.1 dient zur Erläuterung der Funktion der Stopfbuchsbrille. Die Welle 11 wird mit den Pakungsringen 14 abgedichtet. Auf der einen Seite werden die Packungsringe 14 durch die Grundbuchse 12 gehalten und auf der andern Seite werden sie durch die Stopfbuchsbrille 1 bzw. 1a in den Ringraum 15 zwischen Welle 10 und Fassung 13 gepresst. Üblicherweise werden mehr Packungsringe 14 verwendet, als in Fig.1 dargestellt ist. Die Dichtwirkung der Packungsringe 14 lässt im Laufe der Zeit nach. Durch regelmässiges Nachziehen der Stopfbuchsbrille, deren Anpressring dabei immer tiefer in den Ringraum 15 eindringt, lässt sich die Dichtwirkung wieder herstellen. Wie aus Fig.1 ersichtlich ist, kann die erfindungsgemässe Stopfbuchsbrille 1 eine um den Betrag z kürzere Baulänge aufweisen als die bisherige Stopfbuchsbrille 1a, wobei vorausgesetzt ist, dass beide Stopfbuchsbrillen gleich tief, nämlich ungefähr um die Breite eines Packungsringes 14, nachgeschoben werden können. Denn die erfindungsgemässe Stopfbuchsbrille 1 ist über die Fassung 13 stülpbar, bis die Grundplatte 3 des Flansches am Rand der Fassung 13 anstösst.

Die Stopfbuchsbrille 1 in Fig.2 setzt sich aus dem Anpressring 2, der Grundplatte 3, dem hochgezogenen Aussenrand 4 und dem Rohrstück 5 zusammen. Die Grundplatte 3 und der Aussenrand 4 bilden zusammen den Flansch. Es ist hinsichtlich der Biegefestigkeit des Flansches vorteilhaft, wenn die Schraubenlöcher 6 möglichst nahe beim Anpressring sind und wenn der Aussenrand 4 den Bereich zwischen den Schrauben möglichst direkt mit schwach gekrümmten Bögen überbrückt. Diese Ausführung des Aussenrandes 4 ergibt eine Kontur des Flansches, die nicht kreisförmig ist. Die Grundplatte 3 des Flansches hat Ausweitungen 7 für die Schraubenlöcher 6. In dargestellten Ausführungsbeispiel mit zwei Schraubenlöchern 6 weist der Flansch eine elliptische Form auf.

Anstelle von zwei sind selbstverständlich auch mehr Schraubenlöcher möglich. Allerdings ist eine ungerade Anzahl etwas problematisch, da die Gefahr besteht, dass die Stopfbuchsbrille beim Festschrauben verkantet.

Das Ausführungsbeispiel der Fig.3 ist eine zweiteilige Stopfbuchsbrille 1 mit elliptischem Flansch wie schon in Fig.2. Der Schnitt verläuft durch die beiden Schraubenlöcher 6. Der Flanschteil 9 greift mit dem inneren hochgezogenen Rand konzentrisch in den Packungsring-Anpressteil 10 ein.

Wie aus Fig.3 ersichtlich ist, weist der Anpressteil 10 eine geringere Blechdicke auf als der Flanschteil 9: Der Anpressring 2 des tiefgezogenen Anpressteils 10 muss am äusseren Rand einen kleinen Radius aufweisen, damit sich die Packungsringe 14 mit möglichst geringer Deformation in den Ringraum 15 (Fig.1) pressen lassen. Bei einem Wellendurchmesser in der Grössenordnung von 5 cm kann diese Forderung nach kleinem Radius mittels Blech, dessen Dicke rund einen Millimeter beträgt, erfüllt werden. Der Flanschteil 9 wird mit Vorteil aus rund doppelt so dickem Blech tiefgezogen, um so hinsichtlich der Schraubenkräfte eine ausreichend starke Konstruktion zu erhalten.

**Ansprüche**

1. Stopfbuchsbrille mit Flansch, Anpressring und einem dazwischenliegenden Rohrstück zum axialen Pressen von Packungsringen, dadurch gekennzeichnet, dass der Flansch dünnwandig ist und zusammen mit der Rohrstück (5) ein konkaves, in Richtung Anpressring (2) orientiertes Profil aufweist.

2. Stopfbuchsbrille nach Anspruch 1, dadurch gekennzeichnet, dass die Grundplatte (3) des Flansches in radialer Richtung Ausweitungen (7) aufweist, die die Schraubenlöcher (6) umfassen.

3. Stopfbuchsbrille nach einem der Ansprüche 1 oder 2, dadurch gekennzeichnet, dass der Anpressring (2) ein zur Grundplatte (3) paralleler Kreisring ist oder dass der innere Bereich des Anpressrings (2) konisch ausgebildet ist, mit der Konusspitze Richtung Flansch weisend.

4. Stopfbuchsbrille nach einem der Ansprüche 1 bis 3, dadurch gekennzeichnet, dass die Stopfbuchsbrille (1) aus zwei formschlüssig aufeinander passenden Teilen (9, 10) besteht.

5. Stopfbuchsbrille nach Anspruch 4, dadurch gekennzeichnet, dass zum einen Teil (9) der Flansch gehört und dass dieser Teil (9) einen in den andern Teil (10) konzentrisch eingreifenden Bereich aufweist.

6. Stopfbuchsbrille nach einem der Ansprüche 1 bis 5, dadurch gekennzeichnet, dass die Stopfbuchsbrille (1) aus umgeformtem Metallblech hergestellt ist.

7. Stopfbuchsbrille nach einem der Ansprüche 1 bis 6, dadurch gekennzeichnet, dass das Material der Stopfbuchsbrille (1) nichtrostender Stahl ist.

8. Stopfbuchsbrille nach einem der Ansprüche 8 oder 7, dadurch gekennzeichnet, dass die Stopfbuchsbrille (1) aus tiefgezogenem Blech besteht.

9. Stopfbuchsbrille nach einem der Ansprüche 1 bis 5, dadurch gekennzeichnet, dass die Stopfbuchsbrille (1) aus einem gegossenen Material besteht.

10. Wellenabdichtung mit Stopfbuchsbrille nach einem der Ansprüche 1 bis 9, dadurch gekennzeichnet, dass die konkave Vertiefung der Stopfbuchsbrille (1) über die Fassung (13) der Wellenabdichtung stülpbar ist.

EP 0 429 392 A1

Fig.1

Fig.2

Fig.3

4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 320 480 (KLEIN)(04-03-1977) <br> * Das ganze Dokument * <br> — — — | 1-4,6-8 | F 16 J 15/18 |
| A | US-A-3 262 710 (HANSEN)(26-07-1966) <br> * Figur 1 * <br> — — — | 1-4,10 | |
| A | US-A-1 802 309 (MARTIN)(21-04-1931) <br> * Seite 1, Zeile 96 - Seite 2, Zeile 13; Figur 1 * <br> — — — — — | 4,5 | |

| RECHERCHIERTE SACHGEBIETE (Int. Cl.5) |
|---|
| F 16 J |

Der vorliegende Recherchenbericht wurde für alle Patentansprüche erstellt

| Recherchenort | Abschlußdatum der Recherche | Prüfer |
|---|---|---|
| Den Haag | 20 Februar 91 | LEGER M.G.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
 
& : Mitglied der gleichen Patentfamilie, übereinstimmendes Dokument